# EUROPEAN PATENT SPECIFICATION

(11) **EP 3 171 524 B1**
(45) Date of publication and mention of the grant of the patent: **10.06.2020**
(21) Application number: 14897440.5
(22) Date of filing: 14.07.2014
(51) Int. Cl.: H04M 1/60, G06F 13/38, G06F 13/42, H04W 8/00, H04W 4/80, H04W 84/18

(54) **METHOD AND APPARATUS FOR INTERCONNECTING INTELLIGENT TERMINAL AND VEHICLE TERMINAL**
VERFAHREN UND VORRICHTUNG ZUR VERBINDUNG EINES INTELLIGENTEN ENDGERÄTS UND EINES FAHRZEUGTERMINALS
PROCÉDÉ ET APPAREIL D'INTERCONNEXION D'UN TERMINAL INTELLIGENT ET D'UN TERMINAL DE VÉHICULE

(43) Date of publication of application: 24.05.2017
(73) Proprietor: Huawei Technologies Co. Ltd., Shenzhen, Guangdong 518129 (CN)
(72) Inventor: CHEN, Minjiang, Shenzhen Guangdong 518129 (CN); GUO, Ligang, Shenzhen Guangdong 518129 (CN); XIAO, Ningbo, Shenzhen Guangdong 518129 (CN)
(74) Representative: Maiwald Patent- und Rechtsanwaltsgesellschaft mbH
(86) International application number: PCT/CN2014/082167
(87) International publication number: WO 2016/008077

(56) References cited:
- CN-A- 101 494 474
- CN-A- 102 883 048
- CN-A- 102 970 766
- CN-A- 103 491 254
- US-A1- 2002 142 803

## Description

### TECHNICAL FIELD

The present invention relates to an in-vehicle system connection technology, and in particular, to a method and an apparatus for interconnecting a smart terminal and an in-vehicle terminal.

### BACKGROUND

Mirror Link (Mirror Link) is an "Internet of Vehicles" standard jointly launched by some famous international mobile phone vendors and vehicle manufacturers, to regulate an effective connection between a smartphone and an in-vehicle system. In the Mirror Link standard, multiple existing technologies are combined to satisfy various possible use scenarios in a vehicle, including displaying an image and entering a user instruction by means of virtual network computing (Virtual Network Computing, VNC for short), searching for a corresponding device and completing a correct configuration setting by means of universal plug and play (Universal Plug and Play, UPnP), performing audio streaming by means of Bluetooth (Bluetooth) and the Real-Time Transport Protocol (Real-Time Transport Protocol, RTP), and the like.

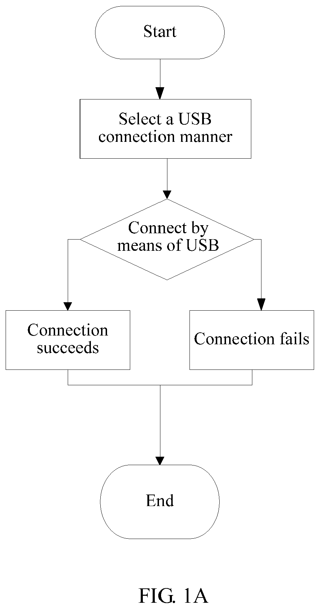

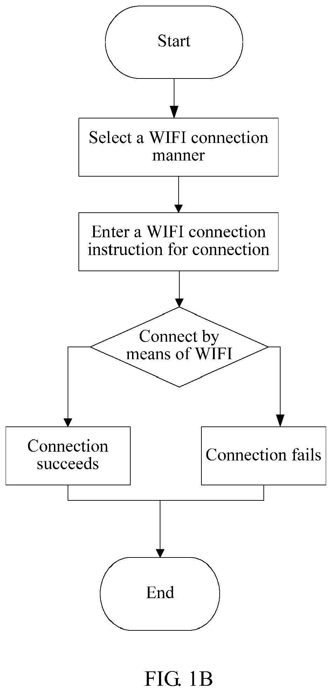

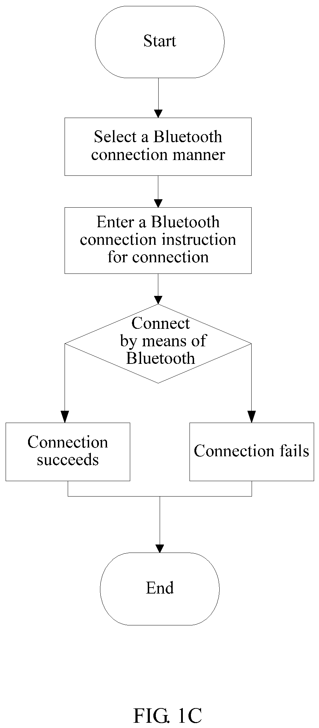

Currently, in a Mirror Link connection manner, a smartphone may establish a connection to an in-vehicle system by means of USB, Bluetooth, or WIFI, and specifically a user may select which manner is used for connection. As shown in FIG. 1A, the user selects USB for connection, where the user connects the mobile phone to the in-vehicle system in a USB manner, or as shown in FIG. 1B or FIG. 1C, the user selects a Wireless Fidelity (Wireless Fidelity, WIFI for short) or a Bluetooth manner for connection. When using WIFI and Bluetooth for connection, the user first needs to select the WIFI manner or the Bluetooth connection manner, and enter a WIFI connection instruction or a Bluetooth connection instruction, and then connection starts. Each connection is implemented in a single connection process, and only after a connection process ends, another connection process can be executed next.

CN102970766A describes a method and a system for automatically connecting WIFI of a vehicle-mounted host and a mobile phone. The WIFI hotspot name, the encryption method and the password are agreed in the onboard host software and the mobile phone software, and the mobile phone WIFI hotspot is opened by the mobile phone software and Mobile phone WIFI hotspot original name, encryption mode and password information to retrieve and modify, you can achieve the car host and mobile phone WIFI hot automatic connection, and in the subsequent repeated connection process without the name, encryption and password for two Times agreed, only need to open the phone WIFI hotspot and car host WIFI search function can be. If the user is not familiar with the WIFI settings, the system's host computer software and mobile phone software will set a pre-set password, the user only need to start the phone software on it. The invention can greatly improve the convenience of establishing a local area network between the host computer and the smart phone, and can effectively promote the popularization of the WIFI in the practical application of the vehicle wireless network in the vehicle body.

CN101494474A describes a method and a terminal device for automatically connecting a Bluetooth Carkit device, wherein the method comprises the following steps: the processor of the terminal device transmits the notification information to the Bluetooth application of the terminal device according to the received electrical signal of the predetermined voltage, wherein the notification Information is used to indicate that the Bluetooth application connects the Bluetooth Carkit device to the terminal device; if the Bluetooth device Carkit address is stored in the nonvolatile memory space of the terminal device, the Bluetooth module of the terminal device reads the Bluetooth Carkit address from the nonvolatile memory space , And according to the Bluetooth Carkit address supported by the agreement, connect the Bluetooth Carkit device with the terminal device. With the technical scheme of the invention, the terminal device is bound to the Bluetooth Carkit device without user's manual establishment of the connection between the terminal device and the Bluetooth Carkit device, which facilitates the user's use and improves the user's experience.

However, in the prior art, when using USB, Bluetooth, or WIFI for connection, before the user performs the connection, the user needs to select a connection manner, and when using the WIFI or Bluetooth connection manner, in addition to the connection, the user further needs to enter a connection instruction. Therefore, operation complexity is increased.

### SUMMARY

The present invention provides a method and an apparatus for interconnecting a smart terminal and an in-vehicle terminal, to resolve a problem in the prior art that operations are excessively complex when a smart terminal is interconnected to an in-vehicle terminal.

In a first aspect, there is provided a method for interconnecting a smart terminal and an in-vehicle terminal as defined in appended claim 1. In a second aspect, there is provided an in-vehicle apparatus as defined in appended claim 5. In a third aspect, there is provided an in-vehicle terminal as defined in appended claim 6.

According to a first example, there is provided a method for interconnecting a smart terminal and an in-vehicle terminal, including:
automatically detecting, by an in-vehicle terminal, a connectable device;
connecting, by the in-vehicle terminal when the in-vehicle terminal detects at least one connectable device, to the detected at least one connectable device; and
displaying, by the in-vehicle terminal if connection succeeds, a connectable device successfully connected to the in-vehicle terminal.

In a first possible implementation manner of the first example, the connectable device includes:
a Universal Serial Bus USB device, a Wireless Fidelity WIFI device, or a Bluetooth device.

According to the first possible implementation manner of the first example, in a second possible implementation manner of the first example, the connecting, by the in-vehicle terminal when the in-vehicle terminal detects at least one connectable device, to the detected at least one connectable device is specifically:
when the in-vehicle terminal detects that the at least one connectable device is the WIFI device, automatically generating, by the in-vehicle terminal, a WIFI connection instruction; and
connecting, by the in-vehicle terminal, to the WIFI device according to the WIFI connection instruction.

According to the first possible implementation manner of the first example, in a third possible implementation manner of the first example, the connecting, by the in-vehicle terminal when the in-vehicle terminal detects at least one connectable device, to the detected at least one connectable device is specifically:
when the in-vehicle terminal detects that the at least one connectable device is the Bluetooth device, automatically generating, by the in-vehicle terminal, a Bluetooth connection instruction; and
connecting, by the in-vehicle terminal, to the Bluetooth device according to the Bluetooth connection instruction.

According to the first example or any one of the first to the third possible implementation manners of the first example, in a fourth possible implementation manner of the first example, the displaying, by the in-vehicle terminal if connection succeeds, a connectable device successfully connected to the in-vehicle terminal includes:
if there is one connectable device successfully connected to the in-vehicle terminal, directly displaying, by the in-vehicle terminal, the connectable device successfully connected to the in-vehicle terminal, or
if there are multiple connectable devices successfully connected to the in-vehicle terminal, displaying, by the in-vehicle terminal according to preset priorities, a connectable device having a high priority.

According to the first example or any one of the first to the fourth possible implementation manners of the first example, in a fifth possible implementation manner of the first example, the method further includes:
when the in-vehicle terminal does not detect the at least one connectable device, repeatedly detecting, by the in-vehicle terminal, the at least one connectable device until the at least one connectable device is detected.

According to a second example, there is provided an in-vehicle apparatus, including:
a detection module, configured to automatically detect a connectable device;
a connection module, configured to connect, when the detection module detects at least one connectable device, to the detected at least one connectable device; and
a display module, configured to display, if the connection module succeeds in connection, a connectable device successfully connected to the connection module.

In a first possible implementation manner of the second example, the connectable device includes:
a Universal Serial Bus USB device, a Wireless Fidelity WIFI device, or a Bluetooth device.

According to the first possible implementation manner of the second example, in a second possible implementation manner of the second example, the connection module is specifically configured to:
when the detection module detects that the at least one connectable device is the WIFI device, automatically generate a WIFI connection instruction; and
connect to the WIFI device according to the WIFI connection instruction.

According to the first possible implementation manner of the second examplet, in a third possible implementation manner of the second example, the connection module is specifically configured to:
when the detection module detects that the at least one connectable device is the Bluetooth device, automatically generate a Bluetooth connection instruction; and
connect to the Bluetooth device according to the Bluetooth connection instruction.

According to the second example or any one of the first to the third possible implementation manners of the second example, in a fourth possible implementation manner of the second example, the display module is specifically configured to: if there is one connectable device successfully connected to the connection module, directly display the connectable device successfully connected to the connection module; or
if there are multiple connectable devices successfully connected to the connection module, display, according to preset priorities, a connectable device having a high priority.

According to the second example or any one of the first to the fourth possible implementation manners of the second example, in a fifth possible implementation manner of the second example, the detection module is further configured to: when the detection module does not detect the at least one connectable device, repeatedly detect the at least one connectable device until the at least one connectable device is detected.

According to a third example, there is provided an in-vehicle terminal, including:
a processor, a memory, and a display, where the memory is configured to store an execution instruction, the processor communicates with the memory, the processor executes the execution instruction, to automatically detect a connectable device, and connect, when at least one connectable device is detected, to the detected at least one connectable device, and the display is configured to display a connectable device successfully connected to the processor.

In a first possible implementation manner of the third example, the connectable device includes:
a Universal Serial Bus USB device, a Wireless Fidelity WIFI device, or a Bluetooth device.

According to the first possible implementation manner of the third example, in a second possible implementation manner of the third example, the processor is specifically configured to: when detecting that the at least one connectable device is the WIFI device, automatically generate a WIFI connection instruction; and
connect to the WIFI device according to the WIFI connection instruction.

According to the first possible implementation manner of the third example, in a third possible implementation manner of the third example, the processor is specifically configured to: when detecting that the at least one connectable device is the Bluetooth device, automatically generate a Bluetooth connection instruction; and
connect to the Bluetooth device according to the Bluetooth connection instruction.

According to the third example or any one of the first to the third possible implementation manners of the third example, in a fourth possible implementation manner of the third example, the display is specifically configured to: if there is one connectable device successfully connected to the processor, directly display the connectable device successfully connected to the processor; or
if there are multiple connectable devices successfully connected to the processor, display, according to preset priorities, a connectable device having a high priority.

According to the third example or any one of the first to the fourth possible implementation manners of the third example, in a fifth possible implementation manner of the third example, the processor is further configured to: when the at least one connectable device is not detected, repeatedly detect the at least one connectable device until the at least one connectable device is detected.

According to the method and the apparatus for interconnecting a smart terminal and an in-vehicle terminal provided in embodiments of the present invention, a connectable device is automatically detected, and connection is automatically performed according to detected at least one connectable device, effectively resolving a problem that operations are excessively complex when there are a relatively large quantity of connection manners between a smart terminal and an in-vehicle terminal, simplifying operation steps in an interconnection process, and increasing security of use.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary
skill in the art may still derive other drawings from these accompanying drawings without creative efforts.
FIG. 1A is a schematic flowchart of connection in a USB manner in the prior art;
FIG. 1B is a schematic flowchart of connection in a WIFI manner in the prior art;
FIG. 1C is a schematic flowchart of connection in a Bluetooth manner in the prior art;
FIG. 2 is a schematic flowchart of a method for interconnecting a smart terminal and an in-vehicle terminal according to an embodiment of the present invention;
FIG. 3 is a schematic flowchart of a method for interconnecting a smart terminal and an in-vehicle terminal according to another embodiment of the present invention;
FIG. 4 is a schematic flowchart of a method for interconnecting a smart terminal and an in-vehicle terminal according to another embodiment of the present invention;
FIG. 5 is a schematic flowchart of a method for interconnecting a smart terminal and an in-vehicle terminal according to another embodiment of the present invention;
FIG. 6 is a schematic structural diagram of an in-vehicle apparatus according to an embodiment of the present invention; and
FIG. 7 is a schematic structural diagram of an in-vehicle terminal according to another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

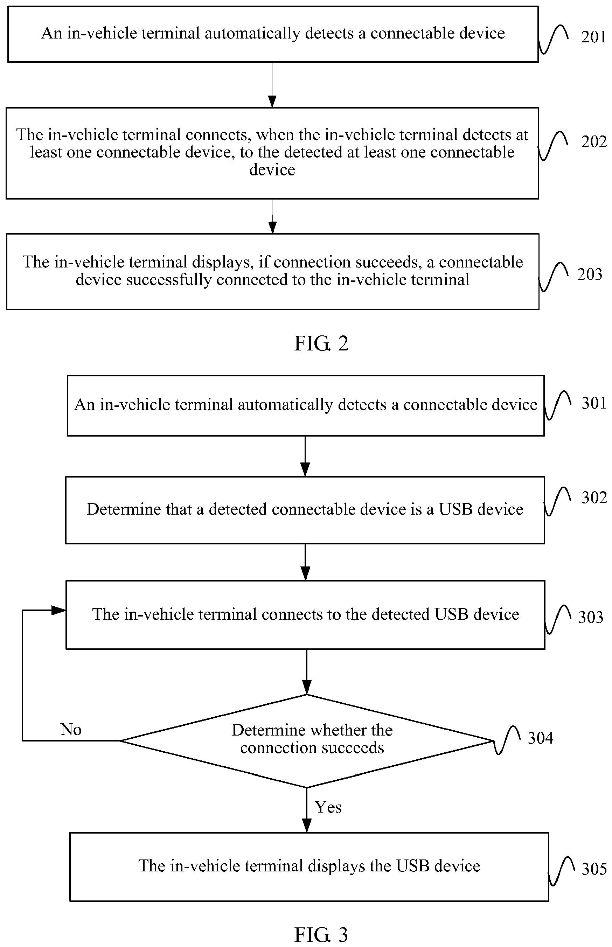

FIG. 2 is a schematic flowchart of a method for interconnecting a smart terminal and an in-vehicle terminal according to an embodiment of the present invention. In this embodiment, a smart terminal may be a smartphone, or may be a tablet computer, and interconnection between the smart terminal and an in-vehicle terminal may be implemented in this embodiment. As shown in FIG. 2, the method includes:
Step 201: An in-vehicle terminal automatically detects a connectable device.

In this embodiment, the in-vehicle terminal automatically detects a currently available connectable device. The connectable device may be a Universal Serial Bus (Universal Serial Bus, USB for short) device, a Wireless Fidelity (Wireless Fidelity, WIFI for short) device, or a Bluetooth device, and one or more connectable devices may be automatically detected by the in-vehicle terminal. In this embodiment, the USB device, the WIFI device, and the Bluetooth device are smart terminals respectively having a USB interface, a WIFI connection function, and a Bluetooth function. In this embodiment, when a USB device is connected to the in-vehicle terminal by using a USB data cable, the in-vehicle terminal automatically detects a pin signal of a USB interface, and the in-vehicle terminal determines, according to the pin signal, that the detected connectable device is the USB device. When the in-vehicle terminal automatically detects that the connectable device is a WIFI device, management software (for example, a WIFI analyzer) in the in-vehicle terminal is used to automatically detect a WIFI signal around. When the WIFI signal around is detected, a WIFI device having a relatively strong WIFI signal is selected according to a WIFI signal strength, and characteristic parameters of the WIFI device, for example, an IP address and a port number of the WIFI device, are also acquired. When the in-vehicle terminal automatically detects that the connectable device is a Bluetooth device, management software in the in-vehicle terminal is used to automatically search for a Bluetooth device around. When the Bluetooth device is found, the in-vehicle terminal determines that the connectable device is the Bluetooth device, that is, the in-vehicle terminal may connect to the detected Bluetooth device.

Step 202: The in-vehicle terminal connects, when the in-vehicle terminal detects at least one connectable device, to the detected at least one connectable device.

In this embodiment, after detecting at least one connectable device, the in-vehicle terminal automatically enters a connection process, and the in-vehicle terminal connects to the detected at least one connectable device. It should be noted that, when detecting multiple connectable devices, the in-vehicle terminal may simultaneously connect to the multiple connectable devices, or may sequentially connect to the multiple connectable devices.

Step 203: The in-vehicle terminal displays, if connection succeeds, a connectable device successfully connected to the in-vehicle terminal.

In this embodiment, when the in-vehicle terminal successfully connects to the detected at least one connectable device, the in-vehicle terminal displays the connectable device successfully connected to the in-vehicle terminal. It should be noted that, as long as the in-vehicle terminal successfully connects to any connectable device, the in-vehicle terminal prompts a user that the connection to the connectable device succeeds, which includes: if there is one connectable device successfully connected to the in-vehicle terminal, the in-vehicle terminal first prompts the user that the connection to the connectable device succeeds, and then the in-vehicle terminal directly displays the connectable device successfully connected to the in-vehicle terminal; or
if there are multiple connectable devices successfully connected to the in-vehicle terminal, as long as the in-vehicle terminal successfully connects to any connectable device, the in-vehicle terminal prompts the user that the connection succeeds, and in the multiple connectable devices successfully connected to the in-vehicle terminals, the in-vehicle terminal displays, according to preset priorities, a connectable device having a high priority.

According to the method for interconnecting a smart terminal and an in-vehicle terminal provided in this embodiment of the present invention, a connectable device is automatically detected, and connection is automatically performed according to detected at least one connectable device, effectively resolving a problem that operations are excessively complex when there are a relatively large quantity of connection manners between a smart terminal and an in-vehicle terminal, and simplifying operation steps in an interconnection process. In addition, manual selection and entering are not required in the connection process, thereby increasing security of using the function.

FIG. 3 is a schematic flowchart of a method for interconnecting a smart terminal and an in-vehicle terminal according to another embodiment of the present invention. Based on the foregoing embodiment, in this embodiment, an example in which a detected connectable device is a USB device is used for description. As shown in FIG. 3, the method includes:
Step 301: An in-vehicle terminal automatically detects a connectable device.

In this embodiment, the in-vehicle terminal automatically detects an available connectable device, where the connectable device may be a USB device, a WIFI device, or a Bluetooth device.

Step 302: Determine that a detected connectable device is a USB device.

In this embodiment, specifically, when the in-vehicle terminal automatically detects a pin signal of a USB interface, the in-vehicle terminal determines, according to the pin signal of the USB interface, that the USB device is an available connectable device. It should be noted that, in this embodiment, one or more USB devices may be detected.

Step 303: The in-vehicle terminal connects to the detected USB device.

In this embodiment, the in-vehicle terminal and the USB device automatically enter a connection process, and establish a connection in a USB manner.

Step 304: Determine whether the connection succeeds, and if yes, perform step 305, or if not, perform step 303.

Step 305: The in-vehicle terminal displays the USB device.

In this embodiment, after the connection succeeds, the in-vehicle terminal prompts a user that the connection succeeds, and displays the successfully connected USB device. It should be noted that, when the in-vehicle terminal successfully connects to multiple USB devices, a high-priority USB device may be selected according to preset priorities for display.

According to the method for interconnecting a smart terminal and an in-vehicle terminal provided in this embodiment of the present invention, a connectable device is automatically detected, and connection is automatically performed according to a detected USB device, effectively resolving a problem that operations are excessively complex when there are a relatively large quantity of connection manners between a smart terminal and an in-vehicle terminal, and simplifying operation steps in an interconnection process. In addition, manual selection and entering are not required in the connection process, thereby increasing security of using the function.

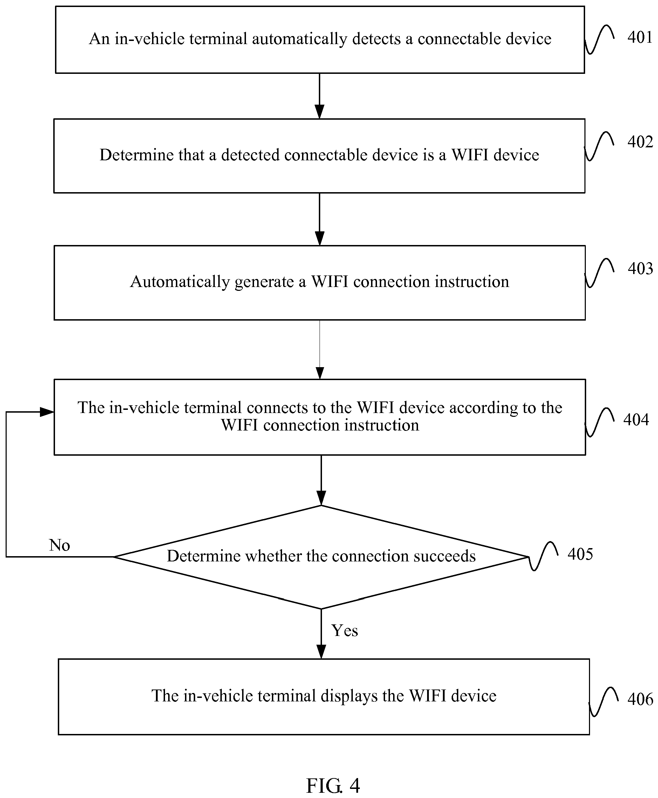

FIG. 4 is a schematic flowchart of a method for interconnecting a smart terminal and an in-vehicle terminal according to another embodiment of the present invention. Based on the foregoing embodiment, in this embodiment, an example in which a detected connectable device is a WIFI device is used for description. As shown in FIG. 4, the method includes:
Step 401: An in-vehicle terminal automatically detects a connectable device.

In this embodiment, the in-vehicle terminal automatically detects a currently available connectable device, where the connectable device may be a USB device, a WIFI device, or a Bluetooth device, and one or more connectable devices may be automatically detected by the in-vehicle terminal.

Step 402: Determine that a detected connectable device is a WIFI device.

In this embodiment, management software (for example, a WIFI analyzer) in the in-vehicle terminal is used to automatically detect a WIFI signal around. When the WIFI signal around is detected, a WIFI device having a relatively strong WIFI signal is selected according to a WIFI signal strength, and characteristic parameters of the WIFI device, for example, an IP address and a port number of the WIFI device, are also acquired.

Step 403: Automatically generate a WIFI connection instruction.

In this embodiment, when detecting that the connectable device is the WIFI device, the in-vehicle terminal automatically generates the WIFI connection instruction, where the WIFI connection instruction has a fixed format. After acquiring the characteristic parameters of the WIFI device, the in-vehicle terminal assigns some characteristic parameters of the WIFI device to particular variables in the WIFI connection instruction, to generate the WIFI connection instruction. For example, in this embodiment, the automatically generated WIFI connection instruction may be:"vnccmd: v=1; t=C; a=***; p=***", where a is the IP address of the WIFI device, p is the port number. The IP address and the port number of the WIFI device are acquired in the detection process, and then the IP address and the port number are respectively assigned to the corresponding variable a and variable p in the connection instruction, to finally generate the WIFI connection instruction. In this embodiment, the WIFI connection instruction is automatically generated, and a user does not need to manually enter a particular parameter to generate a connection instruction, thereby simplifying operation steps in the present invention.

Step 404: The in-vehicle terminal connects to the WIFI device according to the WIFI connection instruction.

In this embodiment, the in-vehicle terminal starts to connect to the WIFI device according to the generated WIFI connection instruction.

Step 405: Determine whether the connection succeeds, and if yes, perform step 406, or if not, perform step 404.

Step 406: The in-vehicle terminal displays the WIFI device.

In this embodiment, after the connection succeeds, the in-vehicle terminal prompts the user that the connection succeeds, and displays the successfully connected WIFI device. According to the method for interconnecting a smart terminal and an in-vehicle terminal provided in this embodiment of the present invention, a connectable device is automatically detected, and connection is automatically performed according to a detected WIFI device, effectively resolving a problem that operations are excessively complex when there are a relatively large quantity of connection manners between a smart terminal and an in-vehicle terminal, and simplifying operation steps in an interconnection process. In addition, manual selection and entering are not required in the connection process, thereby increasing security of using the function.

Further, when the detected connectable device is a Bluetooth device, a difference from the embodiment corresponding to FIG. 4 is that: when the connectable device is the Bluetooth device, a Bluetooth connection instruction is automatically generated, and the in-vehicle terminal connects to the Bluetooth device according to the Bluetooth connection instruction, and displays the Bluetooth device on the in-vehicle terminal, where the Bluetooth connection instruction is similar to the WIFI connection instruction, and both of the connection instructions are generated according to detected characteristic parameters of the device.

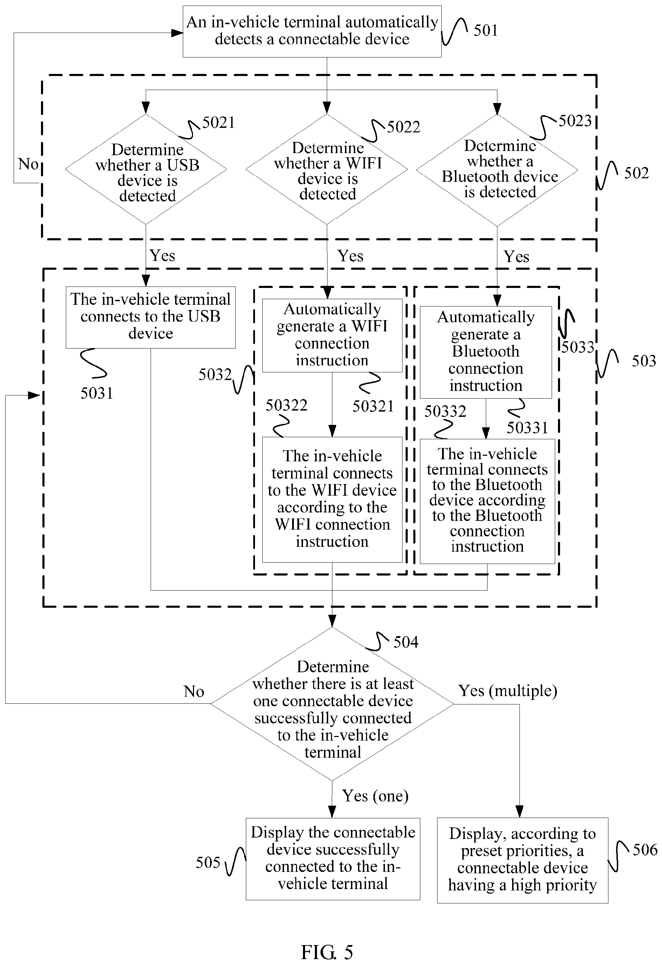

FIG. 5 is a schematic flowchart of a method for interconnecting a smart terminal and an in-vehicle terminal according to another embodiment of the present invention. Based on the foregoing embodiment, in this embodiment, an example in which detected connectable devices are a USB device, a WIFI device, and a Bluetooth device is used for description. As shown in FIG. 5, the method includes:
Step 501: An in-vehicle terminal automatically detects a connectable device.
Step 502: Determine whether at least one connectable device is detected, and if yes, perform step 503, or if not, perform step 501.

In this embodiment, step 502 includes:
Step 5021: Determine whether a USB device is detected.
Step 5022: Determine whether a WIFI device is detected.
Step 5023: Determine whether a Bluetooth device is detected.

In this embodiment, there is no order in step 5021, step 5022, and step 5023, where step 5021 may be first performed, or step 5022 may be first performed, or step 5023 may be first performed. It should be noted that, in step 5021, step 5022, and step 5023, when one connectable device is detected, step 503 may be performed immediately, or after step 5021, step 5022, and step 5023 are all performed, if at least one connectable device is detected, step 503 is performed, or if no connectable device is detected, step 501 is performed. For example, if step 5021 is first performed, and a USB device is detected, step 503 is performed, and step 5022 and step 5023 do not need to be performed; or after step 5021, step 5022, and step 5023 are performed, if only a WIFI device is detected in step 5022, step 503 may also be performed, or if no connectable device is detected in step 5021, step 5022, and step 5023, step 501 is repeatedly performed until a connectable device is detected.

Step 503: The in-vehicle terminal connects to the detected at least one connectable device.

In this embodiment, step 503 includes:
Step 5031: The in-vehicle terminal connects to the USB device.

In this embodiment, in the foregoing step 502, if it is determined that the at least one connectable device is the USB device, the in-vehicle terminal connects to the USB device.

Step 5032: The in-vehicle terminal connects to the WIFI device.

In this embodiment, in the foregoing step 502, if it is determined that the at least one connectable device is the WIFI device, the in-vehicle terminal connects to the WIFI device.

In this embodiment, step 5032 includes:
Step 50321: Automatically generate a WIFI connection instruction.

In this embodiment, during the connection to the WIFI device, a WIFI connection instruction needs to be first automatically generated, and then WIFI connection is performed, where for the WIFI connection instruction, reference may be made to content described in the foregoing embodiment.

Step 50322: The in-vehicle terminal connects to a smart terminal according to the WIFI connection instruction by using the WIFI device.

Step 503 further includes:
Step 5033: The in-vehicle terminal connects to the Bluetooth device.

In this embodiment, in the foregoing step 502, if it is determined that the at least one connectable device is the Bluetooth device, the in-vehicle terminal connects to the Bluetooth device.

Step 5033 includes:
Step 50331: Automatically generate a Bluetooth connection instruction.
Step 50332: The in-vehicle terminal connects to the Bluetooth device according to the Bluetooth connection instruction.
Step 504: Determine whether there is at least one connectable device successfully connected to the in-vehicle terminal, and if not, perform step 503, or if there is one connectable device successfully connected to the in-vehicle terminal, perform step 505, or if there are multiple connectable devices successfully connected to the in-vehicle terminals, perform step 506.

In this embodiment, when multiple connectable devices are detected, and during connection to the multiple connectable devices, there may be only one connectable device successfully connected to the in-vehicle terminal, or there may be multiple connectable devices successfully connected to the in-vehicle terminals, or there may be no connectable device successfully connected to the in-vehicle terminal. For example, when only the connection to the USB device succeeds, step 505 is performed. When the connection to both the USB device and the WIFI device succeeds, step 506 is performed. When the connection to none of the USB device, the WIFI device, and the Bluetooth device succeeds, step 503 is performed, and the connection is repeated.

Step 505: Display the connectable device successfully connected to the in-vehicle terminal.

In this embodiment, because there is only one connectable device successfully connected to the in-vehicle terminal, the connectable device successfully connected to the in-vehicle terminal is directly displayed.

Step 506: Display, according to preset priorities, a connectable device having a high priority.

In this embodiment, for example, the connection to all of the USB device, the WIFI device, and the Bluetooth device succeeds, and a connectable device having a high priority is displayed according to preset priorities. For example, a sequence of the preset priorities may be USB, WIFI, and Bluetooth, and the USB device is displayed. The preset priorities may also be customized, that is, a higher priority may be set for a required connection manner. No limitation is set in this embodiment.

According to the method for interconnecting a smart terminal and an in-vehicle terminal provided in this embodiment of the present invention, a connectable device is automatically detected, and connection is automatically performed according to a detected connectable device, effectively resolving a problem that operations are excessively complex when there are a relatively large quantity of connection manners between a smart terminal and an in-vehicle terminal, and simplifying operation steps in an interconnection process. In addition, manual selection and entering are not required in the connection process, thereby increasing security of using the function.

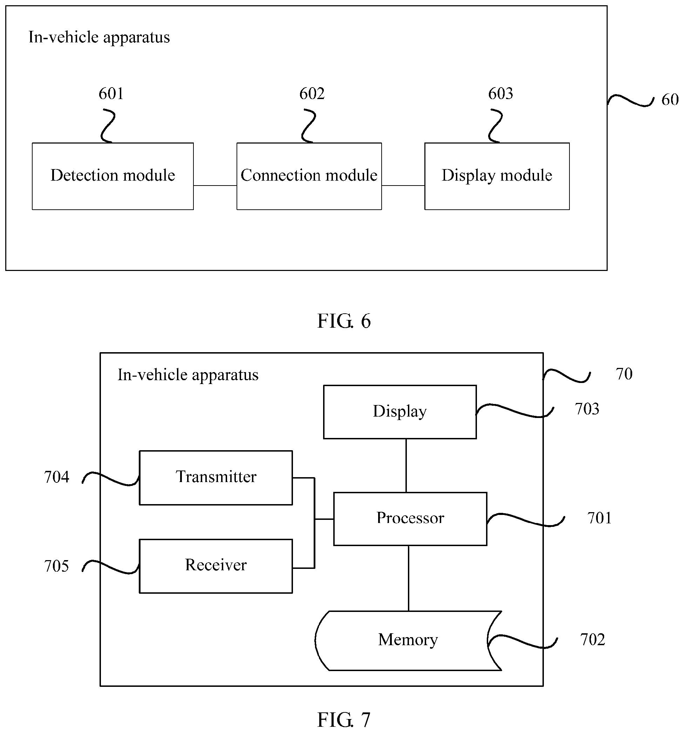

FIG. 6 is a schematic structural diagram of an in-vehicle apparatus according to an embodiment of the present invention. As shown in FIG. 6, the in-vehicle apparatus 60 includes: a detection module 601, a connection module 602, and display module 603, where
the detection module 601 is configured to automatically detect a connectable device;
the connection module 602 is configured to connect, when the detection module detects at least one connectable device, to the detected at least one connectable device; and
the display module 603 is configured to display, if the connection module succeeds in connection, a connectable device successfully connected to the connection module.

The in-vehicle apparatus in the foregoing embodiment is configured to execute a technical solution provided in the embodiment corresponding to FIG. 2, and the implementation principles and technical effects thereof are similar, which are not described herein again.

According to the in-vehicle apparatus provided in this embodiment, the detection module automatically detects a connectable device, and the connection module automatically performs connection according to detected at least one connectable device, effectively resolving a problem that operations are excessively complex when there are a relatively large quantity of connection manners between a smart terminal and an in-vehicle terminal, and simplifying operation steps in an interconnection process. In addition, manual selection and entering are not required in the connection process, thereby increasing security of using the function.

Further, based on this embodiment, the connectable device includes:
a USB device, a WIFI device, or a Bluetooth device.

Further, based on this embodiment, the connection module 602 is specifically configured to:
when the detection module detects that the at least one connectable device is the WIFI device, automatically generate a WIFI connection instruction; and
connect to the WIFI device according to the WIFI connection instruction.

Further, based on this embodiment, the connection module 602 is specifically configured to:
when the detection module detects that the at least one connectable device is the Bluetooth device, automatically generate a Bluetooth connection instruction; and
connect to the Bluetooth device according to the Bluetooth connection instruction.

Further, based on this embodiment, the display module 603 is specifically configured to: if there is one connectable device successfully connected to the connection module, directly display the connectable device successfully connected to the connection module; or
if there are multiple connectable devices successfully connected to the connection module, display, according to preset priorities, a connectable device having a high priority.

Further, based on this embodiment, the detection module 601 is further configured to: when the detection module does not detect the at least one connectable device, repeatedly detect the at least one connectable device until the at least one connectable device is detected.

The in-vehicle apparatus in this embodiment may be configured to execute a technical solution provided in the embodiment corresponding to FIG. 3, FIG. 4, or FIG. 5, and the implementation principles and technical effects thereof are similar, which are not described herein again.

According to the in-vehicle apparatus provided in this embodiment, the detection module automatically detects a connectable device, and the connection module automatically performs connection according to detected at least one connectable device, effectively resolving a problem that operations are excessively complex when there are a relatively large quantity of connection manners between a smart terminal and an in-vehicle terminal, and simplifying operation steps in an interconnection process. In addition, manual selection and entering are not required in the connection process, thereby increasing security of using the function.

FIG. 7 is a schematic structural diagram of an in-vehicle terminal according to another embodiment of the present invention. As shown in FIG. 7, the in-vehicle terminal 70 provided in this embodiment includes: a processor 701, a memory 702, and a display 703, and the in-vehicle terminal 70 may further include a transmitter 704 and a receiver 705. The transmitter 704 and the receiver 705 may be connected to the processor 701. The transmitter 704 is configured to send data or a message, the receiver 705 is configured to receive data or a message, the memory 702 stores an execution instruction, the processor 701 communicates with the memory 702, the processor 701 invokes the execution instruction in the memory 702, to automatically detect a connectable device, and connect, when at least one connectable device is detected, to the detected at least one connectable device, and the display 703 is configured to display a connectable device successfully connected to the processor 701.

Optionally, the connectable device includes: a USB device, a WIFI device, or a Bluetooth device.

In this embodiment, the components described above communicate with each other by using one or more buses. A person skilled in the art may understand that, a structure of the in-vehicle terminal 70 shown in FIG. 7 sets no limitation to the present invention, and the in-vehicle terminal 70 may be in a bus type structure, or may be in a star type structure, and may include more or fewer components than those shown in the figure, or some components may be combined, or a different component deployment may be used.

Optionally, the processor 701 is specifically configured to:
when detecting that the at least one connectable device is the WIFI device, automatically generate a WIFI connection instruction; and
connect to the WIFI device according to the WIFI connection instruction.

Optionally, the processor 701 is specifically configured to:
when detecting that the at least one connectable device is the Bluetooth device, automatically generate a Bluetooth connection instruction; and
connect to the Bluetooth device according to the Bluetooth connection instruction.

Optionally, the processor 701 is specifically configured to: when the at least one connectable device is not detected, repeatedly detect the at least one connectable device until the at least one connectable device is detected.

In this embodiment, the processor 701 is a control center of the in-vehicle terminal, connects to parts of the entire in-vehicle terminal by using various interfaces and lines. By running or executing a software program stored in the memory 702, and invoking data stored in the memory, the processor 701 performs various functions and/or data processing of the in-vehicle terminal. The processor 701 may include an integrated circuit (Integrated Circuit, IC for short), for example, may include a single packaged IC, or may include multiple successive packaged ICs that have same functions or different functions. For example, the processor 701 may include only a central processing unit (Central Processing Unit, CPU for short), or may be a combination of a graphics processing unit (Graphic Processing Unit, GPU for short), a digital signal processor (Digital Signal Processor, DSP for short), and a control chip (for example, a baseband chip) in a communications unit. In this embodiment of the present invention, the CPU may include a single computing core, or may include multiple computing cores.

Optionally, the display 703 is specifically configured to:
if there is one connectable device successfully connected to the processor 701, directly display the connectable device successfully connected to the processor 701, or
if there are multiple connectable devices successfully connected to the processor 701, display, according to preset priorities, a connectable device having a high priority.

The display 703 may be a liquid crystal display (Liquid Crystal Display, LCD for short), or may be an LED display, or may be a display for which a cathode ray tube (Cathode Ray Tube, CRT for short) is used, or an electrophoretic (electrophoretic) display, or a display for which an interferometric modulation of light (Interferometric Modulation of Light) technology is used.

The memory 702 may be configured to store the software program or the data, and by running the software program stored in the memory 702, the processor 701 performs various function applications and data processing of the in-vehicle terminal. The memory 702 mainly includes a program storage area and a data storage area, where the program storage area may store an operating system and an application program required by at least one function, for example, a detection program or a connection program, and the data storage area may store user information.

The in-vehicle terminal in this embodiment may be configured to execute a technical solution provided in the embodiment corresponding to FIG. 2, FIG. 3, FIG. 4, or FIG. 5, and the implementation principles and technical effects thereof are similar, which are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for interconnecting a smart terminal and an in-vehicle terminal, wherein the method comprises:
automatically detecting (201, 401), by an in-vehicle terminal, a connectable device, wherein the connectable device comprises: a Wireless Fidelity, WIFI, device, a Universal Serial Bus, USB, device, or a Bluetooth device;
connecting (202), by the in-vehicle terminal when the in-vehicle terminal detects at least one connectable device, to the detected at least one connectable device, wherein the connecting, by the in-vehicle terminal when the in-vehicle terminal detects at least one connectable device, to the detected at least one connectable device is specifically:
when the in-vehicle terminal detects that the at least one connectable device comprises the WIFI device that is selected according to a WIFI signal strength, acquiring characteristic parameters of the WIFI device, automatically generating (403, 50321), by the in-vehicle terminal, a WIFI connection instruction according to the characteristic parameters, and wherein the connection instruction has a fixed format; and
connecting (202, 404, 50322), by the in-vehicle terminal, to the WIFI device according to the WIFI connection instruction; and
displaying (203, 406, 505), by the in-vehicle terminal if connection succeeds, a connectable device successfully connected to the in-vehicle terminal, comprising: if there are multiple connectable devices successfully connected to the in-vehicle terminal, displaying (506), by the in-vehicle terminal according to preset priorities, a connectable device having a high priority, and wherein the high priority is configured to be set for a device having a WIFI connection manner of the connection manners of USB, WIFI and Bluetooth.

2. The method according to claim 1, wherein the connecting, by the in-vehicle terminal when the in-vehicle terminal detects at least one connectable device, to the detected at least one connectable device is specifically:
when the in-vehicle terminal detects that the at least one connectable device comprises the Bluetooth device, automatically generating (50331), by the in-vehicle terminal, a Bluetooth connection instruction; and
connecting (202, 303, 50332), by the in-vehicle terminal, to the Bluetooth device according to the Bluetooth connection instruction.

3. The method according to any one of claims 1 to 2, wherein the displaying, by the in-vehicle terminal if connection succeeds, a connectable device successfully connected to the in-vehicle terminal comprises:
if there is one connectable device successfully connected to the in-vehicle terminal, directly displaying, by the in-vehicle terminal, the connectable device successfully connected to the in-vehicle terminal.

4. The method according to any one of claims 1 to 3, wherein the method further comprises:
when the in-vehicle terminal does not detect the at least one connectable device, repeatedly detecting, by the in-vehicle terminal, the at least one connectable device until the at least one connectable device is detected.

5. An in-vehicle apparatus, comprising:
a detection module (601), configured to automatically detect a connectable device, wherein the connectable device comprises: a Wireless Fidelity, WIFI, device, a Universal Serial Bus, USB, device, or a Bluetooth device;
a connection module (602), configured to connect according to an WIFI connection instruction, when the detection module detects that at least one connectable device comprises the WIFI device that is selected according to a WIFI signal strength, to the detected at least one connectable device, wherein to connect comprises acquisition of characteristic parameters of the WIFI device, and an automatic generation of the WIFI connection instruction according to the characteristic parameters, and wherein the connection instruction has a fixed format; and
a display module (603), configured to display, if the connection module succeeds in connection, a connectable device successfully connected to the connection module, comprising: if there are multiple connectable devices successfully connected to the in-vehicle terminal, displaying (506), by the in-vehicle terminal according to preset priorities, a connectable device having a high priority, and wherein the high priority is configured to be set for a device having a WIFI connection manner of the connection manners of USB, WIFI and Bluetooth.

6. An in-vehicle terminal, comprising:
a processor (701), a memory (702), and a display (703), wherein the memory is configured to store an execution instruction, the processor communicates with the memory, the processor executes the execution instruction, to automatically detect a connectable device, wherein the connectable device comprises: a Wireless Fidelity, WIFI, device, a Universal Serial Bus USB device, or a Bluetooth device, and connect to an WIFI connection instruction, when at least one connectable device is detected that comprises the WIFI device that is selected according to a WIFI signal strength, to the detected at least one connectable device, wherein to connect comprises acquisition of characteristic parameters of the WIFI device, and an automatic generation of the WIFI connection instruction according to the characteristic parameters, and wherein the connection instruction has a fixed format, and the display is configured to display a connectable device successfully connected to the processor, wherein the display is specifically configured to: if there are multiple connectable devices successfully connected to the processor, display, according to preset priorities, a connectable device having a high priority, and wherein the high priority is configured to be set for a device having a WIFI connection manner of the connection manners of USB, WIFI and Bluetooth .

7. The in-vehicle terminal according to claim 6, wherein the processor is specifically configured to: when detecting that the at least one connectable device is the Bluetooth device, automatically generate a Bluetooth connection instruction; and
connect to the Bluetooth device according to the Bluetooth connection instruction.

8. The in-vehicle terminal according to any one of claims 6 to 7, wherein the display is specifically configured to: if there is one connectable device successfully connected to the processor, directly display the connectable device successfully connected to the processor.

9. The in-vehicle terminal according to any one of claims 6 to 8, wherein the processor is further configured to: when the at least one connectable device is not detected, repeatedly detect the at least one connectable device until the at least one connectable device is detected.

## Patentansprüche

1. Verfahren zum Verbinden eines intelligenten Endgeräts und eines Fahrzeugendgeräts, wobei das Verfahren Folgendes umfasst:
automatisches Detektieren (201, 401), durch ein Fahrzeugendgerät, einer verbindbaren Vorrichtung, wobei die verbindbare Vorrichtung Folgendes umfasst:
eine "Wireless Fidelity"("WIFI")-Vorrichtung, eine "Universal Serial Bus"("USB")-Vorrichtung oder eine "Bluetooth"-Vorrichtung;
Verbinden (202), durch das Fahrzeugendgerät, wenn das Fahrzeugendgerät mindestens eine verbindbare Vorrichtung detektiert, mit der detektierten mindestens einen verbindbaren Vorrichtung, wobei sich das Verbinden, durch das Fahrzeugendgerät, wenn das Fahrzeugendgerät mindestens eine verbindbare Vorrichtung detektiert, mit der detektierten mindestens einen verbindbaren Vorrichtung spezifisch um Folgendes handelt:
wenn das Fahrzeugendgerät detektiert, dass die mindestens eine verbindbare Vorrichtung die "WIFI"-Vorrichtung umfasst, die gemäß einer "WIFI"-Signalstärke ausgewählt wurde, Erfassen von charakteristischen Parametern der "WIFI"-Vorrichtung, automatisches Generieren (403, 50321), durch das Fahrzeugendgerät, eines "WIFI"-Verbindungsbefehls gemäß den charakteristischen Parametern und wobei der Verbindungsbefehl ein festes Format aufweist; und
Verbinden (202, 404, 50322), durch das Fahrzeugendgerät, mit der "WIFI"-Vorrichtung gemäß dem "WIFI"-Verbindungsbefehl; und
Anzeigen (203, 406, 505), durch das Fahrzeugendgerät, wenn die Verbindung gelingt, einer erfolgreich mit dem Fahrzeugendgerät verbundenen verbindbaren Vorrichtung, umfassend: wenn mehrere erfolgreich mit dem Fahrzeugendgerät verbundene verbindbare Vorrichtungen vorliegen, Anzeigen (506), durch das Fahrzeugendgerät gemäß voreingestellten Prioritäten, einer verbindbaren Vorrichtung, die eine hohe Priorität aufweist, und
wobei die hohe Priorität konfiguriert ist, für eine Vorrichtung eingestellt zu werden, die eine "WIFI"-Verbindungsart aus den Verbindungsarten "USB, "WIFI" und "Bluetooth" aufweist.

2. Verfahren nach Anspruch 1, wobei sich das Verbinden, durch das Fahrzeugendgerät, wenn das Fahrzeugendgerät mindestens eine verbindbare Vorrichtung detektiert, mit der detektierten mindestens einen verbindbaren Vorrichtung spezifisch um Folgendes handelt:
wenn das Fahrzeugendgerät detektiert, dass die mindestens eine verbindbare Vorrichtung die "Bluetooth"-Vorrichtung umfasst, automatisches Generieren (50331), durch das Fahrzeugendgerät, eines "Bluetooth"-Verbindungsbefehls; und Verbinden (202, 303, 50332), durch das Fahrzeugendgerät, mit der "Bluetooth"-Vorrichtung gemäß dem "Bluetooth"-Verbindungsbefehl.

3. Verfahren nach einem der Ansprüche 1 bis 2, wobei das Anzeigen, durch das Fahrzeugendgerät, wenn die Verbindung gelingt, einer erfolgreich mit dem Fahrzeugendgerät verbundenen verbindbaren Vorrichtung umfasst:
wenn eine erfolgreich mit dem Fahrzeugendgerät verbundene verbindbare Vorrichtung vorliegt, unmittelbares Anzeigen, durch das Fahrzeugendgerät, der erfolgreich mit dem Fahrzeugendgerät verbundenen verbindbaren Vorrichtung.

4. Verfahren nach einem der Ansprüche 1 bis 3, wobei das Verfahren ferner umfasst:
wenn das Fahrzeugendgerät die mindestens eine verbindbare Vorrichtung nicht detektiert, wiederholtes Detektieren, durch das Fahrzeugendgerät, der mindestens einen verbindbaren Vorrichtung, bis die mindestens eine verbindbare Vorrichtung detektiert worden ist.

5. Fahrzeuginternes Gerät, Folgendes umfassend:
ein Detektionsmodul (601), konfiguriert zum automatischen Detektieren einer verbindbaren Vorrichtung, wobei die verbindbare Vorrichtung Folgendes umfasst: eine "Wireless Fidelity"("WIFI")-Vorrichtung, eine "Universal Serial Bus"("USB")-Vorrichtung oder eine "Bluetooth"-Vorrichtung;
ein Verbindungsmodul (602), konfiguriert zum Verbinden gemäß einem "WIFI"-Verbindungsbefehl, wenn das Detektionsmodul detektiert, dass mindestens eine verbindbare Vorrichtung die "WIFI" Vorrichtung umfasst, die gemäß einer "WIFI"-Signalstärke ausgewählt wurde, mit der detektierten mindestens einen verbindbaren Vorrichtung, wobei das Verbinden das Erfassen von charakteristischen Parametern der "WIFI"-Vorrichtung und eine automatische Generierung des "WIFI"-Verbindungsbefehls gemäß den charakteristischen Parametern umfasst und wobei der Verbindungsbefehl ein festes Format aufweist; und
ein Anzeigemodul (603), konfiguriert zum Anzeigen, wenn das Verbindungsmodul eine erfolgreiche Verbindung aufbaut, einer erfolgreich mit dem Verbindungsmodul verbundenen verbindbaren Vorrichtung, umfassend: wenn mehrere erfolgreich mit dem Fahrzeugendgerät verbundene verbindbare Vorrichtungen vorliegen, Anzeigen (506), durch das Fahrzeugendgerät gemäß voreingestellten Prioritäten, einer verbindbaren Vorrichtung, die eine hohe Priorität aufweist, und wobei die hohe Priorität konfiguriert ist, für eine Vorrichtung eingestellt zu werden, die eine "WIFI"-Verbindungsart der Verbindungsarten "USB, "WIFI" und "Bluetooth" aufweist.

6. Fahrzeugendgerät, Folgendes umfassend:
einen Prozessor (701), einen Speicher (702) und eine Anzeige (703), wobei der Speicher konfiguriert ist, einen Ausführungsbefehl zu speichern, der Prozessor mit dem Speicher kommuniziert, der Prozessor den Ausführungsbefehl zum automatischen Detektieren einer verbindbaren Vorrichtung ausführt, wobei die verbindbare Vorrichtung Folgendes umfasst: eine "Wireless Fidelity"("WIFI")-Vorrichtung, eine "Universal Serial Bus"("USB")-Vorrichtung oder eine "Bluetooth"-Vorrichtung, und Verbinden mit einem "WIFI"-Verbindungsbefehl, wenn mindestens eine verbindbare Vorrichtung detektiert wird, welche die "WIFI"-Vorrichtung umfasst, die gemäß einer "WIFI"-Signalstärke ausgewählt wurde, mit der detektierten mindestens einen verbindbaren Vorrichtung, wobei Verbinden das Erfassen von charakteristischen Parametern der "WIFI"-Vorrichtung und eine automatische Generierung des "WIFI"-Verbindungsbefehls gemäß den charakteristischen Parametern umfasst und wobei der Verbindungsbefehl ein festes Format aufweist und die Anzeige konfiguriert ist zum Anzeigen einer erfolgreich mit dem Prozessor verbundenen verbindbaren Vorrichtung, wobei die Anzeige spezifisch zu Folgendem konfiguriert ist: wenn mehrere verbindbare Vorrichtungen erfolgreich mit dem Prozessor verbunden sind, Anzeigen, gemäß voreingestellten Prioritäten, einer verbindbaren Vorrichtung, die eine hohe Priorität aufweist, und wobei die hohe Priorität konfiguriert ist, für eine Vorrichtung eingestellt zu werden, die eine "WIFI"-Verbindungsart aus den Verbindungsarten "USB, "WIFI" und "Bluetooth" aufweist.

7. Fahrzeugendgerät nach Anspruch 6, wobei der Prozessor spezifisch zu Folgendem konfiguriert ist: wenn er detektiert, dass die mindestens eine verbindbare Vorrichtung eine "Bluetooth"-Vorrichtung ist, automatisches Generieren eines "Bluetooth"-Verbindungsbefehls; und
Verbinden mit der "Bluetooth"-Vorrichtung gemäß dem "Bluetooth"-Verbindungsbefehl.

8. Fahrzeugendgerät nach einem der Ansprüche 6 bis 7, wobei die Anzeige spezifisch zu Folgendem konfiguriert ist: wenn eine erfolgreich mit dem Prozessor verbundene verbindbare Vorrichtung vorliegt, unmittelbares Anzeigen der mit dem Prozessor erfolgreich verbundenen verbindbaren Vorrichtung.

9. Fahrzeugendgerät nach einem der Ansprüche 6 bis 8, wobei der Prozessor ferner zu Folgendem konfiguriert ist: wenn die mindestens eine verbindbare Vorrichtung nicht detektiert wird, wiederholtes Detektieren der mindestens einen verbindbaren Vorrichtung, bis die mindestens eine verbindbare Vorrichtung detektiert worden ist.

## Revendications

1. Procédé d'interconnexion d'un terminal intelligent et d'un terminal de véhicule, dans lequel le procédé comprend :
la détection automatique (201, 401), par un terminal de véhicule, d'un dispositif connectable, dans lequel le dispositif connectable comprend :
un dispositif Wireless Fidelity, WIFI, un dispositif Universal Serial Bus, USB, ou un dispositif Bluetooth ;
la connexion (202), par le terminal de véhicule, lorsque le terminal de véhicule détecte au moins un dispositif connectable, à l'au moins un dispositif connectable détecté, dans lequel la connexion, par le terminal de véhicule, lorsque le terminal de véhicule détecte au moins un dispositif connectable, à l'au moins un dispositif connectable détecté est spécifiquement :
lorsque le terminal de véhicule détecte que l'au moins un dispositif connectable comprend le dispositif WIFI qui est sélectionné en fonction d'une intensité de signal WIFI, l'acquisition de paramètres caractéristiques du dispositif WIFI, la génération automatique (403, 50321), par le terminal de véhicule, d'une instruction de connexion WIFI conformément aux paramètres caractéristiques, et dans lequel l'instruction de connexion présente un format fixe ; et
la connexion (202, 404, 50322), par le terminal de véhicule, au dispositif WIFI conformément à l'instruction de connexion WIFI ; et
l'affichage (203, 406, 505), par le terminal de véhicule, si la connexion réussit, d'un dispositif connectable dont la connexion au terminal de véhicule a réussi, comprenant : s'il y a plusieurs dispositifs connectables dont la connexion au terminal de véhicule a réussi, l'affichage (506), par le terminal de véhicule conformément à des priorités prédéfinies, d'un dispositif connectable ayant une priorité élevée, et dans lequel la priorité élevée est configurée pour être définie pour un dispositif ayant un mode de connexion WIFI choisi parmi les modes de connexion USB, WIFI et Bluetooth.

2. Procédé selon la revendication 1, dans lequel la connexion, par le terminal de véhicule, lorsque le terminal de véhicule détecte au moins un dispositif connectable, à l'au moins un dispositif connectable détecté est spécifiquement :
lorsque le terminal de véhicule détecte que l'au moins un dispositif connectable comprend le dispositif Bluetooth, la génération automatique (50331), par le terminal de véhicule, d'une instruction de connexion Bluetooth ; et
la connexion (202, 303, 50332), par le terminal de véhicule, au dispositif Bluetooth conformément à l'instruction de connexion Bluetooth.

3. Procédé selon l'une quelconque des revendications 1 et 2, dans lequel l'affichage, par le terminal de véhicule, si la connexion réussit, d'un dispositif connectable dont la connexion au terminal de véhicule a réussi comprend :
s'il y a un dispositif connectable dont la connexion au terminal de véhicule a réussi, l'affichage direct, par le terminal de véhicule, du dispositif connectable dont la connexion au terminal de véhicule a réussi.

4. Procédé selon l'une quelconque des revendications 1 à 3, dans lequel le procédé comprend en outre :
lorsque le terminal de véhicule ne détecte pas l'au moins un dispositif connectable, la détection répétée, par le terminal de véhicule, de l'au moins un dispositif connectable jusqu'à ce que l'au moins un dispositif connectable soit détecté.

5. Appareil de véhicule, comprenant :
un module de détection (601), configuré pour détecter automatiquement un dispositif connectable, dans lequel le dispositif connectable comprend :
un dispositif Wireless Fidelity, WIFI, un dispositif Universal Serial Bus, USB, ou un dispositif Bluetooth ;
un module de connexion (602), configuré pour se connecter conformément à une instruction de connexion WIFI, lorsque le module de détection détecte qu'au moins un dispositif connectable comprend le dispositif WIFI qui est sélectionné en fonction d'une intensité de signal WIFI, à l'au moins un dispositif connectable détecté, dans lequel la connexion comprend l'acquisition de paramètres caractéristiques du dispositif WIFI, et une génération automatique de l'instruction de connexion WIFI conformément aux paramètres caractéristiques, et dans lequel l'instruction de connexion présente un format fixe ; et
un module d'affichage (603), configuré pour afficher, si le module de connexion réussit à se connecter, un dispositif connectable dont la connexion au module de connexion a réussi, comprenant : s'il y a plusieurs dispositifs connectables dont la connexion au terminal de véhicule a réussi, l'affichage (506), par le terminal de véhicule conformément à des priorités prédéfinies, d'un dispositif connectable ayant une priorité élevée, et dans lequel la priorité élevée est configurée pour être définie pour un dispositif ayant un mode de connexion WIFI choisi parmi les modes de connexion USB, WIFI et Bluetooth.

6. Terminal de véhicule, comprenant :
un processeur (701), une mémoire (702) et un dispositif d'affichage (703), dans lequel la mémoire est configurée pour stocker une instruction d'exécution, le processeur communique avec la mémoire, le processeur exécute l'instruction d'exécution, pour détecter automatiquement un dispositif connectable, dans lequel le dispositif connectable comprend : un dispositif Wireless Fidelity, WIFI, un dispositif Universal Serial Bus, USB, ou un dispositif Bluetooth, et se connecter à une instruction de connexion WIFI, lorsqu'au moins un dispositif connectable qui est détecté comprend le dispositif WIFI qui est sélectionné en fonction d'une intensité de signal WIFI, à l'au moins un dispositif connectable détecté, dans lequel la connexion comprend l'acquisition de paramètres caractéristiques du dispositif WIFI, et une génération automatique de l'instruction de connexion WIFI conformément aux paramètres caractéristiques, et dans lequel l'instruction de connexion présente un format fixe, et le dispositif d'affichage est configuré pour afficher un dispositif connectable dont la connexion au processeur a réussi, dans lequel le dispositif d'affichage est spécifiquement configuré pour : s'il y a de multiples dispositifs connectables dont la connexion au processeur a réussi, afficher, conformément à des priorités prédéfinies, un dispositif connectable ayant une priorité élevée, et dans lequel la priorité élevée est configurée pour être définie pour un dispositif ayant un mode de connexion WIFI choisi parmi les modes de connexion USB, WIFI et Bluetooth.

7. Terminal de véhicule selon la revendication 6, dans lequel le processeur est spécifiquement configuré pour : lorsqu'il détecte que l'au moins un dispositif connectable est le dispositif Bluetooth, générer automatiquement une instruction de connexion Bluetooth ; et
se connecter au dispositif Bluetooth conformément aux instructions de connexion Bluetooth.

8. Terminal de véhicule selon l'une quelconque des revendications 6 et 7, dans lequel le dispositif d'affichage est spécifiquement configuré pour : s'il y a un dispositif connectable dont la connexion au processeur a réussi, afficher directement le dispositif connectable dont la connexion au processeur a réussi.

9. Terminal de véhicule selon l'une quelconque des revendications 6 à 8, dans lequel le processeur est en outre configuré pour : lorsque l'au moins un dispositif connectable n'est pas détecté, détecter de manière répétée l'au moins un dispositif connectable jusqu'à ce que l'au moins un dispositif connectable soit détecté.
